(19) Europäisches Patentamt
European Patent Office
Office européen des brevets

(11) **EP 2 756 314 B1**

(12) **EUROPEAN PATENT SPECIFICATION**

(45) Date of publication and mention
of the grant of the patent:
**13.07.2016 Bulletin 2016/28**

(51) Int Cl.:
**G01P 1/08** *(2006.01)* **B60K 35/00** *(2006.01)*
**G07C 5/08** *(2006.01)*

(21) Application number: **12769455.2**

(22) Date of filing: **11.09.2012**

(86) International application number:
**PCT/GB2012/000706**

(87) International publication number:
**WO 2013/038125 (21.03.2013 Gazette 2013/12)**

(54) **IN-VEHICLE ACCELEROMETERS**

FAHRZEUGINTERNE BESCHLEUNIGUNGSMESSER

ACCÉLÉROMÈTRES DANS DES VÉHICULES

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **12.09.2011 GB 201115704**

(43) Date of publication of application:
**23.07.2014 Bulletin 2014/30**

(73) Proprietors:
• **Mike Knight Management Ltd
Ascot
Berkshire SL5 9AY (GB)**
• **Daniel Sebastian Keith White
Guildford
Surrey GU4 7WA (GB)**

(72) Inventor: **WHITE, Daniel
Woking, Surrey GU22 9NB (GB)**

(74) Representative: **Deans, Michael John Percy
Lane End House
Hookley Lane
Elstead
Surrey GU8 6JE (GB)**

(56) References cited:
**EP-A2- 2 012 276     EP-A2- 2 105 338
US-A1- 2003 176 962     US-A1- 2005 273 216
US-A1- 2009 319 095**

**Description**

This disclosure relates to in-vehicle accelerometers. More particularly it relates to in-car accelerometers, namely an accelerometer intended to be used within a three or more wheeled motor vehicle adapted to be driven on roads, and to displays or interfaces therefor.

Every operation that a driver performs when controlling a vehicle will produce an acceleration of some kind. Whether one is concerned with speed, efficiency, safety or comfort, the standard of driving can be assessed to some extent by analysing the acceleration forces experienced. A "comfortable ride" will be one where occupants of the vehicle experience low acceleration forces, namely forces that are not large enough to change the shape of the more liquid parts of the occupant's body, nor require them to use excessive muscle force to stay in one place, nor to disorientate them.

Learning to drive with low acceleration forces is learning to drive well. An in-car accelerometer would be a useful guide for a driver, especially a relatively inexperienced driver, or their instructor, as to how well they were driving.

GB2443018 White discloses an accelerometer designed for use in vehicles to provide an occupant of the vehicle with quantified information about weight transfer within the vehicle as it moves. A mechanical arrangement is described in which one or more weights slide, roll or pivot against one or more springs, the movement of the spring(s) being mechanically translated into movement of a pointer against a dial scale as a measure of G-forces.

Although this device worked well, it needed to be carefully set up and zeroed in order to provide reliable results. Moreover, the movement of a pointer could prove distracting when an inexperienced driver should be concentrating on other elements of their driving, especially since times of high acceleration often coincided with incidents that required sudden changes in movement for example to avoid an obstacle or to brake or when a driver was taking a bend at too high a speed.

More recently, low cost electronic accelerometer chips have become readily available, and are commonly employed in smart phones and tablet computers.

McKeown US6130608 employs an accelerometer chip in a device for warning vehicle drivers, in particular truck drivers, when the magnitude of lateral forces on the vehicle exceed a pre-set level. As the lateral forces increase, successive lights in a linear display are lit, and when the lateral forces exceed the pre-set level an audible warning is given through a speaker.

As explained in more detail below, the present disclosure makes use of an accelerometer chip to provide an improved in-vehicle accelerometer that incorporates an interface adapted to provide a vehicle occupant with information in a more intuitive manner regarding weight transfer within the vehicle as it moves, and in a form that can be more readily assimilated by an occupant of a moving vehicle, especially the driver, than the pointer and dial of GB2443018 or the linear display of US6130608.

JP2005265800 of Star Mfg Co describes an acceleration display for a vehicle, including a biaxial accelerometer sensor comprising a diaphragm/weight arrangement, in which the two axes of the mechanical accelerometer are defined in relation to the display unit so that the display unit shows acceleration fore, aft, left and right in quadrants of the display.

In accordance with this disclosure, there is provided an accelerometer adapted for in-car use, the accelerometer comprising: an accelerometer chip; a display interface adapted to display to the driver of the vehicle while driving an indication of net acceleration force perceived by the accelerometer chip in the plane, fixed relative to the vehicle, that includes the centre of gravity of the vehicle when the vehicle is stationary and standing on a level horizontal surface, which plane is parallel to that horizontal surface, at least in magnitude, and optionally also in direction fore-and-aft and/or left-and-right; the display interface including an indicator defining a datum position and adapted to provide an indication of the magnitude of net perceived acceleration force in the said plane of the vehicle by the extent from said datum position that successive regions of the indicator are lit, the indicator being coupled to circuitry linked to the accelerometer chip; characterised in that the successive regions lie in concentric rings around said datum position; and in that the accelerometer further comprises a levelling mechanism to aid set up within the vehicle, the levelling mechanism being provided by a set-up mode in which the orientation of the accelerometer chip is determined by the acceleration due to gravity while the vehicle is stationary on level ground, allowing a zeroing correction, the zeroing correction being applied thereafter while the accelerometer is in use and the vehicle is travelling.

It will readily be understood that the plane, fixed relative to the vehicle, that includes the centre of gravity of the vehicle when the vehicle is stationary and standing on a level horizontal surface, which plane is parallel to that horizontal surface, will be tilted upwardly or downwardly slightly from true horizontal as the vehicle goes uphill or downhill.

Particular embodiments have one or more of the following features: The indicator comprises a portion of a light-emitting diode (LED) or liquid crystal display (LCD) screen, more particularly a thin organic light-emitting diode (OLED) screen or active matrix organic light-emitting diode (AMOLED) screen. The indicator is provided by incandescent lamps lit in succession. The indicator is provided, in a preferred arrangement, by a plurality of light-emitting diodes (LEDs) arranged in an array and adapted to be lit by circuitry linked to the accelerometer chip, the magnitude of net perceived acceleration force being indicated by the extent from said datum position that LEDs in the array are lit. Each ring is divided into quadrants up, down, left and right on the display, whereby the net magnitude and direction of perceived acceleration force along a fore-and-aft axis of the vehicle is indicated by the number of partial rings in the up or down quadrants that are lit at any time, and the net magnitude and direction of perceived acceleration force left or right of the vehicle is indicated by the number of partial rings in the left or right quadrants that are lit at any time. The accelerometer includes a display mode selector adapted to select at least between vector mode (in which acceleration forward, braking deceleration backwards, turning left and turning right are displayed in the quadrants of the concentric rings) and four direction scalar mode (in which the magnitude of net acceleration force is displayed by the number of full concentric rings lit). The display mode selector is adapted additionally to select braking/acceleration scalar mode (in which net acceleration force in the fore or aft direction due to braking or acceleration of the vehicle is displayed as concentric rings, ignoring acceleration forces left or right) and/or turning scalar mode (in which net acceleration force left or right due to turning is displayed as concentric rings, ignoring acceleration forces forwardly due to acceleration or rearwardly due to braking). The accelerometer is provided with a suction pad adapted for vehicle occupant selected placement within an existing vehicle. The accelerometer includes a body portion in which the accelerometer chip is mounted and a display portion in which the display interface is mounted, the display portion being mounted on the body portion so that its orientation relative to the body portion may be varied, allowing an occupant of the vehicle to orient the display for best personal visibility. The accelerometer includes audio feedback designed to work in sync with the display interface. A change in pitch, volume, pulse rate, rhythm or melody may correspond to a change in acceleration. Sensitivity of the display is dampened, and optionally adjustable, to avoid rapid changes in the indicated acceleration displayed. This may be achieved by including a low-pass filter, preferably a low-pass infinite impulse reaction filter, in circuitry linking the accelerometer and the display interface.

Embodiments of accelerometer adapted for in-car use are more particularly described hereinbelow by way of example only with reference to the accompanying drawings, in which:-

Fig. 1 is an overall perspective view of an in-car accelerometer;
Fig. 2 shows the display interface of the accelerometer of Fig. 1;
Fig. 3 shows an arrangement of LEDs in concentric circles; and
Fig. 4 shows a schematic block diagram for the operating and control system for the accelerometer of Fig. 1.

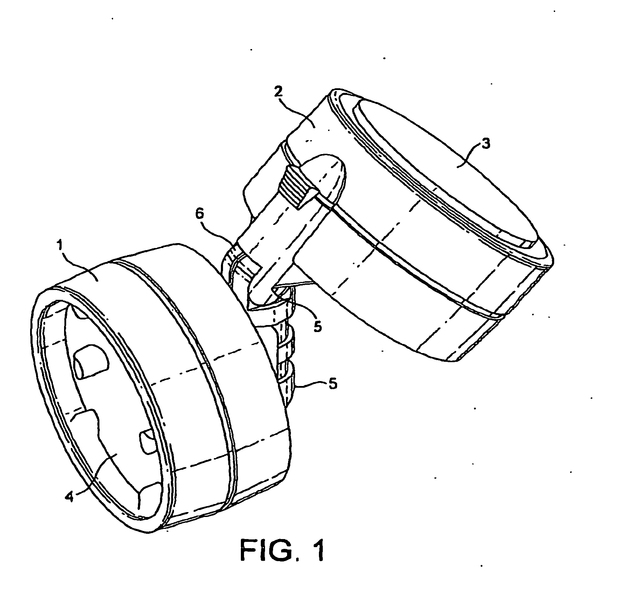

The accelerometer 1 shown in Fig. 1 is adapted for in-car mounting. It comprises a body portion 1 and a display portion 2 in which a display interface 3 is mounted. The body portion is provided with at least one sucker pad 4 for releasably mounting the body portion to a surface of the motor vehicle such as the inside surface of the windscreen. The display portion 2 is mounted on the body portion by respective part-spherical joints 5 at opposite ends of a rod 6 or by other means allowing the orientation of the display portion relative to the body portion to be varied, allowing the driver of the vehicle to orient the display interface 3 for best personal visibility while driving.

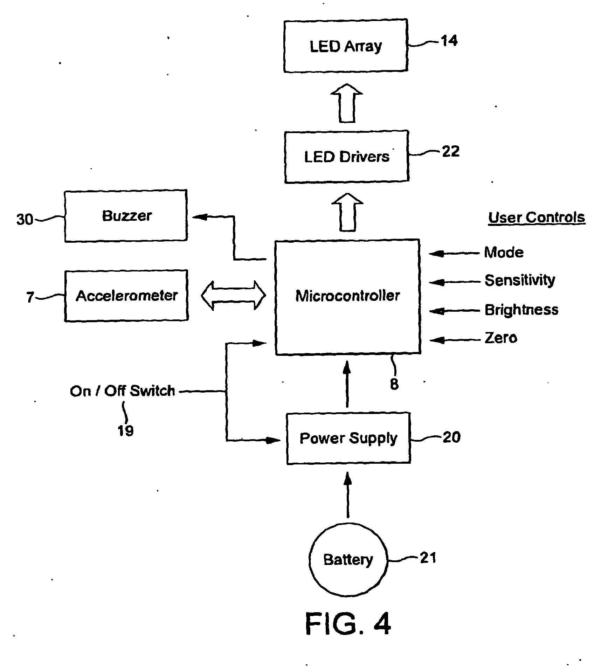

Within body portion 2 is mounted an accelerometer chip 7 (Fig. 4) of the kind now commonly employed in smart phones. Such accelerometer chips are widely available from a number of suppliers. We have found that a suitable such accelerometer chip is a **Freescale**™ MMA7455L three axis digital accelerometer available from Freescale Semiconductor Inc of Austin, Texas, United States. The accelerometer chip 7 is connected to a suitable programmable microcontroller 8 for example via a serial peripheral interface. Any suitable microcontroller may be employed. We prefer a **Microchip**™ dsPIC30F4013 microcontroller available from Microchip Technology Inc. of Chandler, Arizona, United States.

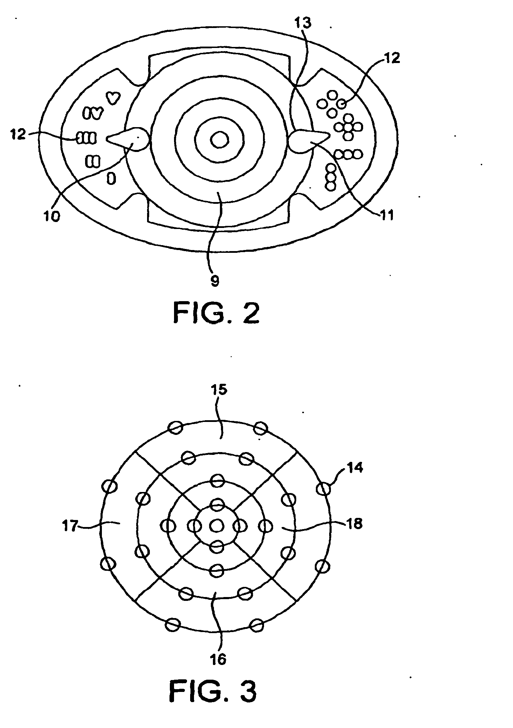

Display interface 3 is best shown in Fig. 2 and displays an indicator comprising a plurality of concentric rings 9, a sensitivity control 10 and a mode selector 11. Both the sensitivity control and the mode selector are defined by a plurality of indicia 12 for the degree of sensitivity or the selected mode and a respective pointer 13. The interface may be constructed as a conventional touch screen in which touching a specific indicium 12 both selects that sensitivity or mode in the control system for the display interface and causes an electronically displayed pointer 13 to point to the selected indicium. In this case there are five levels of sensitivity, explained in more detail below, and four modes, as explained below. As shown in Fig. 3 an array of 25 LEDs 14 is arranged behind the concentric rings. There is a single LED at the centre of the innermost ring, four in each of the 2$^{nd}$ and 3$^{rd}$ rings, and eight in each of the 4$^{th}$ and 5$^{th}$ rings. The LEDs of the 2$^{nd}$ to 5$^{th}$ rings are arranged in quadrants, namely a fore quadrant 15, and aft quadrant 16, a left quadrant 17 and a right quadrant 18. Suitable drivers for the LEDs are readily available, such as STP16CP05 low voltage 16-bit constant current LED sink drivers available from STMicroelectronics of Geneva, Switzerland. In an alternative arrangement, the LEDs could be replaced by an array of incandescent lamps.

Within the body portion 2 is optionally also situated a buzzer 30. There are many types of buzzers commercially available but we have found the **Kingsgate Electronic Corporation**™ piezo buzzer, part number KPEG208, works well. The buzzer 30 is connected to the microcontroller 8 via a serial peripheral interface. The buzzer 30 is programmed to work in parallel with the display interface 3. In this case there are five levels of sensitivity explained in more detail below. Referring again to Fig. 4, an on-off switch 19 controls both the microcontroller 8 and a power supply 20 therefor. Power supply 20 is suitably a switch mode power supply that provides the 3.3 volt DC power required for our specific microcontroller 8 from either four AA batteries providing a battery supply 21 or the nominal 12 volt DC power supply from the vehicle.

The microcontroller is programmed in a suitable software language such as C and comprises a number of source files, as set out in Table 1, below:

Table 1

| File | Description |
|---|---|
| Accelerometer.c | Accelerometer interface functions and filtering routines. Axis values are read every 10ms and filtered using a low pass infinite impulse response (IIR) digital filter. |
| ADC.c | Functions to interface to the analogue-to-digital converter (ADC) of the microcontroller and read voltages associated with the power supply and the mode and range position sensors. |
| Delay.c | Functions to produce accurate time delays. |
| EEPROM.c | Functions to access persistent data stored in the microcontroller's electrically erasable programmable read-only memory (EEPROM). These consist of the selected brightness level, the accelerometer offset values and the accelerometer zero position. |
| LED.c | Functions to control the LEDs via the two drivers and set the overall brightness and the brightness of each ring. |
| main.c | Contains initialisation routines and main program loop. |
| MMA7455L.c | Low-level accelerometer access functions. |
| Motion.c | Functions for processing accelerometer values and determining magnitude and direction of the applied force. |
| Serial.c | Functions for accessing serial-to-USB interface. |
| Sound.c | Functions for producing audio feedback using the buzzer. |
| State.c | State machine functions. |
| Switch.c | Functions for accessing switch states. |
| Traps.c | Error trap code. |

The firmware contains a main task loop which runs every 10ms. This loop reads the inputs from the accelerometer chip and then updates the state machine that controls the operating mode of the unit as a whole. Interrupts are used to provide accurate time intervals for driving the state machine and controlling LED brightness.

The several states defined in the state machine are set out in Table 2, below:

Table 2

| State | Description |
|---|---|
| STATE_POWER_ON | Initial state. Checks that on/off switch has been pressed for at least 500ms before allowing the next state to be activated.<br>Moves to STATE_ZERO if zero switch is pressed; otherwise the next state is STATE_STARTUP. |
| STATE_ZERO | Performs offset adjustment of accelerometer under the assumption that the processor board has been placed flat on a level surface.<br>Moves to STATE_STARTUP once this process is complete. |
| STATE_STARTUP | Reads the latest settings from the EEPROM before controlling the sequence of lighting the LED rings in turn starting from the centre.<br>Moves to STATE_RUNNING when this process is complete. |
| STATE_RUNNING | Normal operating state. Updates LEDs based on current mode, sensitivity and applied force.<br>Moves to STATE_SHUTDOWN if either battery voltage is low or the on/off switch has been pressed for more than 500ms or the unit has been idle for 20 minutes.<br>Moves to STATE_LEVEL if the sucker switch is pressed. |

(continued)

| State | Description |
|---|---|
| | Moves to STATE_ADJUST if the brightness switch is pressed. |
| STATE_LEVEL | Displays 'spirit level' to guide user when installing the unit in a vehicle. |
| | Records zero position and returns to STATE_STARTUP when sucker switch is released. |
| | Moves to STATE_SHUTDOWN if either the battery voltage is low or the on/off switch has been pressed for more than 500ms. |
| | Moves to STATE_ADJUST if the brightness switch is pressed. |
| STATE_ADJUST | Lights a single ring of LEDs at the chosen brightness level. |
| | Moves to STATE_RUNNING if the brightness switch is not pressed for 1 second. |
| STATE_SHUTDOWN | Controls the sequence of lighting the LED rings in turn starting with the outer ring. |
| | Moves to STATE_POWER_OFF when this process is complete. |
| STATE_POWER_OFF | Disables power supply which removes power to the microcontroller and stops the firmware from running. |

It is deemed unnecessary to set forth the specific coding employed for the above software and firmware in any specific device, since coding will be a routine matter for a competent programmer given the sequence of logic states set out above and the remaining generally routine control functions.

The accelerometer chip derives X, Y and Z values for acceleration in three mutually orthogonal directions. The microprocessor takes these values and converts them into fore-aft and side-side values relative to the vehicle; and then decides which LEDs to light and when to light them.

Before this can be done, the instrument needs to know how it is positioned relative to the vehicle, and so a setting up or 'zeroing' process is required when the accelerometer is first installed in the vehicle. The vehicle is parked on a level road so that it experiences the earth's gravitational force (acceleration) directly downwardly. The body portion 2 is placed on the windscreen with its sucker 4 'open'. When the sucker is open, the unit is in 'spirit level' mode; i.e. it takes the Y output from the accelerometer chip (which represents side-to-side in the vehicle) and if the left hand side of the unit is high (e.g. the Y axis output goes positive) it illuminates successive rings in the left hand quadrant, ring 5 being very high, ring one being level. If the right hand side of the unit goes high (e.g. the Y axis output goes negative) the same thing happens in the right hand quadrant. The user adjusts the unit until the Y axis is level (only the centre ring is on) and then closes the sucker 4, fixing body portion 2 to the windscreen.

When the sucker 4 is closed the unit exits 'spirit level' mode and goes through a zeroing process. It uses the earth's vertically operating gravitational acceleration to automatically calculate the angle between the X axis of the accelerometer chip and vertical. In effect this is the angle of rake of the vehicle windscreen. It stores this "tilt-angle" until zeroed again. Mathematically, where Z is measured in G-forces (1G = the acceleration due to gravity:

$$\sin \text{Tiltangle} = Z$$

When the zeroing is complete the unit can then operate in its standard fashion.

The arrangement described above is our preferred method for zeroing the accelerometer, but other mechanical arrangements are also feasible. Thus body portion 1 containing the accelerometer chip may be attached to the sucker via a set of lockable gimbals mounted directly above the centre of gravity of the body portion. Provided that the chip is mounted in the body portion correctly, and the vehicle is parked on level ground, when the gimbals lock is released the enclosure will find its own zero. The gimbals may then be locked again. In an alternative arrangement, body portion 1 containing the accelerometer chip may be attached to the sucker via a set of lockable gimbals, and the out-puts fore-aft and left-right of the chip represented on the quadrants of the display (Fig. 3). The user may then manually level the body portion by adjustment of the gimbals (namely: find the position where no forces are displayed) and then lock the gimbals.

In both of the above cases, the first axis of gimbals rotation should be perpendicular to the plane of the sucker, and the second axis should run left-right; thus ensuring that the body portion will face forwards.

Data from the accelerometer chip is sampled many times a second, and each sample goes through the stages set out below:

The processor periodically reads the three axis output of the chip.

Using the X and Z axis outputs from the accelerometer chip and the previously recorded "tilt angle" a trigonometric sum is made to remove the vertical (relative to vehicle) element of any changes in acceleration force and so convert the X / Z axis outputs from the accelerometer chip into a Fore-Aft figure relative to the vehicle:

$$Foreaft = [sin(tiltangle) * X] + [cos(tiltangle) * Z]$$

The side-to-side acceleration is provided by directly reading the Y axis signal from the accelerometer chip, because the Y axis has already been levelled.

It will readily be understood that acceleration in the four directions Fore, Aft, Left and Right can be represented by just two figures that can be either positive or negative.

The preferred embodiment of accelerometer provides for four different modes of operation, but practical embodiments of accelerometer may be produced in accordance with the teaching of this disclosure with more or less available modes of operation. Our four modes comprise:

1 - Vector mode:

Fore, Aft, Left and Right perceived accelerations are displayed in their respective quadrants, acceleration aft indicating braking; the number of rings being illuminated in each quadrant being determined by the sensitivity setting (see below).

2 - Scalar mode

The Fore-Aft and Side-Side figures are summed using Pythagoras' theorem, the net magnitude of acceleration being given by:

$$\sqrt{\{(Fore\text{-}Aft)^2 + (Side\text{-}Side)^2\}}$$

and the resultant magnitude is displayed using whole rings; the number of rings illuminated in all four quadrants simultaneously being determined by the sensitivity setting (see below).

3 - Fore-Aft scalar mode

The Fore-Aft figure is displayed using whole rings in all four quadrants simultaneously; the number of rings illuminated being determined by the sensitivity setting (see below).

4 - Side-Side scalar mode

The Side-Side figure is displayed using whole rings in all four quadrants simultaneously; the number of rings illuminated being determined by the sensitivity setting (see below).

The use of concentric rings from a central datum position divided into quadrants provides an indication of perceived acceleration in a manner that is intuitive both as to magnitude and direction without a user needing to watch a pointer. Successive rings may be differently or deeper (alternatively, lighter) coloured, again to provide an intuitive indication. As will be appreciated providing such intuitive display, enables the magnitude (and when displayed) direction of perceived acceleration to be noticed in a driver's peripheral vision while they may be concentrating on the more immediate needs of a particular driving manoeuvre.

If the display produces very large changes and especially if those changes occur too rapidly, as it may happen in a pointer and dial display, the driver may be unable to derive useful lessons from the instrument, and so our preferred embodiments of in-car accelerometer are subject both to filtering of the raw signal and to sensitivity selection, as between five levels of sensitivity in the example of Fig. 2. These determine the 'on/off' values for each ring. Table 3, below, shows the on/off value for the fifth ring at each sensitivity setting. The other rings are suitably set to come on at five equal divisions of that figure. In an alternative arrangement, they could be set to a non-linear scale, such as a logarithmic scale.

Table 3

| Sensitivity setting | Fore | Aft | Side-Side |
|---|---|---|---|
| 1 | 0.1 | 0.175 | 0.2 |

EP 2 756 314 B1

(continued)

| Sensitivity setting | Fore | Aft | Side-Side |
|---|---|---|---|
| 2 | 0.15 | 0.2625 | 0.3 |
| 3 | 0.25 | 0.4375 | 0.5 |
| 4 | 0.425 | 0.7438 | 0.85 |
| 5 | 0.6 | 1.2 | 1.2 |

It will be seen that the on/off values are different for the different directions. This means that within each sensitivity setting, the Fore measurement (effectively forward acceleration) can be set to be more sensitive, so the Aft measurement (effectively braking) must reach a higher value to turn a particular ring on than the Fore measurement would need to reach to switch that same ring on.

Before being displayed the measurements are put through a low-pass infinite impulse reaction filter, which dampens the changes. We have found that the use of a low-pass filter, preferably a low-pass infinite impulse reaction filter, is important for providing a display that the diver, whose primary attention is necessarily on driving, can follow. The filter may be coupled directly to receive the raw signals from the accelerometer chip 7. Alternatively, it may be interposed in the output from the microcontroller 8 to drivers 22 for the LEDs or immediately upstream of the array of LEDs 14. A filter may also effectively be provided by program logic within the microcontroller itself.

Although the detailed description above is primarily in terms of illuminating an array of LEDs, other arrangements are also feasible. Thus, in place of such an array, the indicator may comprise a portion of a LED or LCD screen in which successive regions from the datum position are lit in succession to indicate magnitude and optionally also direction of net perceived acceleration. OLED and AMOLED screens are available from a number of sources including Yunnan North OLiGHTEK Opto-Electronic Technology of Kunming, China, and have the advantage of being relatively thin and flexible

A user might not always notice a display, particularly if they are having to concentrate on other matters such as a driving manoeuvre. For this reason the accelerometer 1 is optionally also fitted with the aforementioned buzzer 30. The buzzer 30 is capable of acting in sync with the display to provide the user with audio, as well as visual, feedback. The audio feedback will be achieved through the buzzer creating a burst of sound at a regular interval. The length of the interval will depend on which ring is illuminated.

Table 4

| Number of Rings or Segments of the Display Illuminated or Revealed | Audio Feedback |
|---|---|
| 0 | None |
| 1 | 0.1 burst of sound every 1.1s |
| 2 | 0.1s burst of sound every 0.6s |
| 3 | 0.1s burst of sound every 0.35s |
| 4 | 0.1s burst of sound every 0.225s |
| 5 | 0.1s burst of sound every 0.1625s |

To avoid confusion when there is a rapid change in the number of rings or display segments illuminated or revealed, we have found it best to restrict the rate at which the audio feedback changes. This can be achieved by starting a timer when a ring is initially illuminated and the buzzer starts emitting a burst of sound at a regular interval, according to which ring is illuminated. The audio feedback system is reset when the number of rings illuminated has altered and the full length of the appropriate regular time interval has passed since the last burst of sound.

Put another way, if $T_r$ = the designated interval between sound bursts for the current ring, and t = the time elapsed since the last buzzer sounding, then:

$$\text{If } t < T_r, \text{ wait;}$$

$$\text{If } t \geq T_r, \text{ then sound buzzer.}$$

7

Some people may prefer only to receive audio feedback at higher acceleration forces or for certain quadrants. For this reason, the system preferably allows a user to choose when audio feedback is emitted.

Alternative types of audio feedback are feasible within the teaching of the present disclosure.

The audio feedback may be triggered by software on the microcontroller, and produced by a system containing a signal generator, an amplifier and a speaker. This arrangement would allow for changes in pitch and volume. The amplifier and speaker may be onboard hardware, or the audio signal may be transmitted by either radio wave or wire to the vehicle's audio system.

Alternatively audio feedback may be triggered by software on the microcontroller, and produced by a system containing sound files recorded on digital media, an analogue to digital converter, an amplifier and a speaker. The amplifier and the speaker may be onboard hardware, or the audio signal may be transmitted by either radio wave or wire to the vehicle's audio system. With more modem car stereos it is possible to do away with an onboard analogue to digital converter, and relay digitised sound information directly to the car stereo via radio wave, a USB cable or other forms of coupling.

In a further embodiment, the audio feedback may be triggered by software on the microcontroller, and produced by a percussive mechanism containing a spring return electromagnetic solenoid arranged so that the plunger of the solenoid strikes a convenient surface such as the windscreen, the body of the unit, or a purpose made striking plate.

It will also be understood that, rather than providing the accelerometer as a separate instrument for mounting within a vehicle, it could be incorporated, for example into the dashboard of a motor vehicle as original equipment.

Although the primary intention of Applicant is to provide an accelerometer that displays perceived acceleration in real time, there may be advantage in displaying the perceived acceleration with a small delay of around 1-2 seconds so that a driver can glance at the display interface immediately after making a driving manoeuvre to see whether the acceleration involved in that manoeuvre was reasonable or excessive. A person skilled in this field could readily include a simple delay circuit in the schematic block diagram of Fig. 4 or within the logic of the microcontroller.

## Claims

1. An accelerometer (1) adapted for in-car use, the accelerometer (1) comprising: an accelerometer chip (7); a display interface (3) adapted to display to the driver of the vehicle while driving an indication of net acceleration force perceived by the accelerometer chip (7) in the plane, fixed relative to the vehicle, that includes the centre of gravity of the vehicle when the vehicle is stationary and standing on a level horizontal surface, which plane is parallel to that horizontal surface, at least in magnitude, and optionally also in direction fore-and-aft and/or left-and-right; the display interface (3) including an indicator defining a datum position and adapted to provide an indication of the magnitude of net perceived acceleration force in the said plane of the vehicle by the extent from said datum position that successive regions of the indicator are lit, the indicator being coupled to circuitry linked to the accelerometer chip (7); **characterised in that** the successive regions lie in concentric rings (9) around said datum position; and **in that** the accelerometer further comprises a levelling mechanism to aid set up within the vehicle, the levelling mechanism being provided by a set-up mode in which the orientation of the accelerometer chip is determined by the acceleration due to gravity while the vehicle is stationary on level ground, allowing a zeroing correction, the zeroing correction being applied thereafter while the accelerometer is in use and the vehicle is travelling.

2. An accelerometer (1) according to Claim 1, further **characterised in that** the indicator is selected from the group comprising a portion of a light-emitting diode (LED) screen, a portion of a thin organic light-emitting diode (OLED) screen, a portion of an active matrix organic light-emitting diode (AMOLED) screen, a portion of a liquid crystal display (LCD) screen and incandescent lamps lit in succession.

3. An accelerometer (1) according to Claim 1, further **characterised in that** the indicator is provided by a plurality of light-emitting diodes (LEDs) (14) arranged in an array and adapted to be lit by circuitry linked to the accelerometer chip (7), the magnitude of net perceived acceleration force being indicated by the extent from said datum position that LEDs in the array (14) are lit.

4. An accelerometer (1) according to Claim 1, further **characterised in that** each ring is divided into quadrants up (15), down (16), left (17) and right (18) on the display, whereby the net magnitude and direction of perceived acceleration force along a fore-and-aft axis of the vehicle is indicated by the number of partial rings (9) in the up (15) or down (16) quadrants that are lit at any time, and the net magnitude and direction of perceived acceleration force left or right of the vehicle is indicated by the number of partial rings in the left (17) or right (18) quadrants that are lit at any time.

**5.** An accelerometer (1) according to Claim 4, further **characterised in that** the accelerometer (1) includes a display mode selector (11) adapted to select at least between vector mode (in which acceleration forward, braking deceleration backwards, turning left and turning right are displayed in the quadrants of the concentric rings (9)) and four direction scalar mode (in which the magnitude of net acceleration force is displayed by the number of full concentric rings (9) lit).

**6.** An accelerometer (1) according to Claim 5, further **characterised in that** the display mode selector (11) is adapted to select braking/acceleration scalar mode (in which net acceleration force in the fore or aft direction due to braking or acceleration of the vehicle is displayed as concentric rings (9), ignoring acceleration forces left or right) and/or turning scalar mode (in which net acceleration force left or right due to turning is displayed as concentric rings (9), ignoring acceleration forces forwardly due to acceleration or rearwardly due to braking).

**7.** An accelerometer (1) according to Claim 1, further **characterised in that** the accelerometer (1) is provided with a suction pad (4) adapted for vehicle occupant selected placement within an existing vehicle.

**8.** An accelerometer (1) according to Claim 1, further **characterised in that** the accelerometer (1) includes a body portion in which the accelerometer chip (7) is mounted and a display portion (2) in which the display interface (3) is mounted, the display portion (2) being mounted on the body portion so that its orientation relative to the body portion may be varied, allowing an occupant of the vehicle to orient the display for best personal visibility.

**9.** An accelerometer (1) according to Claim 1, further **characterised in that** the accelerometer (1) includes audio feedback designed to work in sync with the display interface (3).

**10.** An accelerometer (1) according to Claim 9, further **characterised in that** a change in acceleration is indicated by an audible change selected from a change in pitch, a change in volume, a change in pulse rate, a change in rhythm and a change in melody.

**11.** An accelerometer (1) according to any preceding Claim, further **characterised in that** sensitivity of the display is dampened, and optionally adjustable, to avoid rapid changes in the indicated acceleration displayed.

**12.** An accelerometer (1) according to Claim 11, further **characterised in that** the circuitry coupling the accelerometer (1) and the display interface (3) includes a low-pass filter, preferably a low-pass infinite impulse reaction filter.

**Patentansprüche**

**1.** Beschleunigungsmesser (1) zur Verwendung in einem Auto, wobei der Beschleunigungsmesser (1) folgendes umfasst: einen Beschleunigungsmesser-Chip (7); eine Anzeigeschnittstelle (3), die ausgelegt ist dem Fahrer des Fahrzeugs beim Fahren die Netto-Beschleunigungskraft anzuzeigen, die der Beschleunigungsmesser-Chip (7) in der Ebene, die relativ zum Fahrzeug fixiert ist, wahrnimmt und die den Schwerpunkt des Fahrzeugs umfasst, wenn sich das Fahrzeug nicht bewegt und auf einer ebenen horizontalen Fläche steht, wobei diese Ebene zumindest in den Ausmaßen und gegebenenfalls auch in Richtung nach vorne und hinten und/oder nach links und rechts parallel zu dieser horizontalen Fläche ist; die Anzeigeschnittstelle (3) mit Anzeige definiert eine Bezugsposition und ist so ausgelegt, die Größe der wahrgenommenen Netto-Beschleunigungskraft in der besagten Fahrzeugebene durch die Abweichung von der Bezugsposition durch Aufleuchten aufeinanderfolgender Bereiche der Anzeige anzuzeigen, wobei die Anzeige durch eine Schaltung mit dem Beschleunigungsmesser-Chip (7) verbundenen ist; **dadurch gekennzeichnet, dass** die aufeinanderfolgenden Bereiche in konzentrischen Ringen (9) um die besagte Bezugsposition liegen; und dass der Beschleunigungssensor ferner einen Nivelliermechanismus umfasst, der das Einrichten im Fahrzeugs erleichtert und der Nivelliermechanismus über einen Setup-Modus verfügt, bei dem die Ausrichtung des Beschleunigungsmesser-Chips, während das Fahrzeug auf einem ebenen Boden steht, durch die Beschleunigung aufgrund der Schwerkraft bestimmt wird und eine Korrektur der Nullpunkteinstellung ermöglicht, wobei diese Korrektur der Nullpunkteinstellung danach verwendet wird, wenn der Beschleunigungsmesser in Gebrauch ist und das Fahrzeug fährt.

**2.** Beschleunigungsmesser (1) nach Anspruch 1, weiterhin **dadurch gekennzeichnet, dass** die Anzeige entweder aus einem Teil eines Leuchtdioden-(LED)-Bildschirms, einem Teil eines dünnen organischen Leuchtdioden-(OLED)-Bildschirms, einem Teil eines organischen-Aktivmatrix-Leuchtdioden-(AMOLED)-Bildschirms, einem Teil eines Flüssigkristall-(LCD)-Bildschirms und nacheinander aufleuchtenden Glühlampen besteht.

3. Beschleunigungsmesser (1) nach Anspruch 1 weiterhin **dadurch gekennzeichnet, dass** die Anzeige durch eine Vielzahl von in einer Matrix angeordneten Leuchtdioden (LEDs) (14) erfolgt, die so angepasst sind, dass sie durch die Schaltung mit dem Beschleunigungsmesser-Chip (7) aufleuchten und sich die Größe der wahrgenommenen Netto-Beschleunigungskraft durch die Entfernung von der besagten Bezugsposition bestimmt und die LEDs in der Matrix entsprechend aufleuchten lässt.

4. Beschleunigungsmesser (1) nach Anspruch 1 weiterhin **dadurch gekennzeichnet, dass** jeder Ring auf der Anzeige in einen oberen (15), unteren (16), linken (17) und rechten (18) Quadranten unterteilt ist, wobei der Netto-Betrag und die Richtung der wahrgenommenen Beschleunigungskraft entlang der Vorwärts-Rückwärts-Achse des Fahrzeugs durch die Anzahl der gleichzeitig aufleuchtenden Teilringe (9) im oberen (15) oder unteren (16) Quadranten angegeben wird und der Netto-Betrag und die Richtung der wahrgenommenen Beschleunigungskraft des Fahrzeugs nach links oder rechts durch die Anzahl der im linken (17) oder rechten (18) Quadranten gleichzeitig aufleuchtenden Teilringe angegeben wird.

5. Beschleunigungsmesser (1) nach Anspruch 4 weiterhin **dadurch gekennzeichnet, dass** Beschleunigungsmesser (1) einen Anzeigemodus-Wahlschalter (11) umfasst, mit dem mindestens zwischen einem Vektormodus (bei dem eine Beschleunigung nach vorne, eine Bremsverzögerung nach hinten, eine Linksdrehung und eine Rechtsdrehung in den Quadranten der konzentrischen Ringe (9) angezeigt werden) und einem Vier-Richtungen-Skalenmodus (bei dem die Stärke der Netto-Beschleunigungseinrichtungskraft durch die Anzahl der voll aufleuchtenden konzentrischen Ringe (9) angezeigt wird) gewählt werden kann.

6. Beschleunigungsmesser (1) nach Anspruch 5 weiterhin **dadurch gekennzeichnet, dass** der Anzeigemodus-Wahlschalter (11) zusätzlich so angepasst ist, dass man zwischen einem Brems-/Beschleunigungs-Skalenmodus (bei dem die durch Bremsen oder Beschleunigen des Fahrzeugs nach vorne oder hinten wirkenden Netto-Beschleunigungskräfte als konzentrische Ringe (9) angezeigt und die nach links oder rechts wirkenden Beschleunigungskräfte ignoriert werden) und/oder dem Kurven-Skalenmodus (bei dem die aufgrund einer Kurvenfahrt nach links oder rechts wirkenden Netto-Beschleunigungskräfte als konzentrische Ringe (9) angezeigt und die aufgrund von Beschleunigung nach vorne oder durch Bremsen nach hinten wirkenden Beschleunigungskräfte ignoriert werden) wählen kann.

7. Beschleunigungsmesser (1) nach Anspruch 1 weiterhin **dadurch gekennzeichnet, dass** der Beschleunigungsmesser (1) mit einem Haftsauger (4) ausgestattet ist, damit ihn die Fahrzeuginsassen in einem vorhandenen Fahrzeug frei platzieren können.

8. Beschleunigungsmesser (1) nach Anspruch 1 weiterhin **dadurch gekennzeichnet, dass** der Beschleunigungsmesser (1) einen Gehäuseteil aufweist, in dem der Beschleunigungsmesser-Chip (7) untergebracht ist, und einen Anzeigenteil (2), in dem die Anzeigeschnittstelle (3) montiert ist, wobei der Anzeigenteil (2) auf dem Gehäuseteil montiert ist, damit seine Ausrichtung relativ zum Gehäuseteil variiert werden kann und die Fahrzeuginsassen die Anzeige so ausrichten können, dass sie diese am besten sehen können.

9. Beschleunigungsmesser (1) nach Anspruch 1 weiterhin **dadurch gekennzeichnet, dass** der Beschleunigungsmesser (1) eine Audio-Rückmeldung umfasst, die so entworfen wurde, dass sie mit der Anzeigeschnittstelle (3) synchron arbeitet.

10. Beschleunigungsmesser (1) nach Anspruch 9 weiterhin **dadurch gekennzeichnet, dass** eine Änderung in der Beschleunigung durch einen wählbaren akustischen Wechsel von Tonhöhe, Lautstärke, Frequenz, Rhythmus und Melodie angezeigt wird.

11. Beschleunigungsmesser (1) nach einem der obigen Ansprüche weiterhin **dadurch gekennzeichnet, dass** die Empfindlichkeit der Anzeige gedämpft wird und gegebenenfalls so eingestellt werden kann, dass schnelle Wechsel in der angezeigten Beschleunigung vermieden werden.

12. Beschleunigungsmesser (1) nach Anspruch 11 weiterhin **dadurch gekennzeichnet, dass** die Schaltung, die den Beschleunigungsmesser (1) mit der Anzeigeschnittstelle (3) verbindet, einen Tiefpassfilter, vorzugsweise einen Tiefpassfilter mit unendlicher Impulsantwort umfasst.

**Revendications**

1. Accéléromètre (1) adapté pour une utilisation embarquée en voiture, l'accéléromètre (1) comprenant : une puce accéléromètre (7) ; une interface d'affichage (3) adaptée pour afficher au conducteur du véhicule pendant la conduite une indication de la force d'accélération nette perçue par la puce accéléromètre (7) dans le plan, fixe par rapport au véhicule, qui inclut le centre de gravité du véhicule lorsque le véhicule est immobile et se repose sur une surface horizontale, ce plan étant parallèle à cette surface horizontale, au moins en amplitude, et optionnellement aussi en direction avant et arrière et/ou gauche et droite ; l'interface d'affichage (3) incluant un indicateur définissant une position de référence et étant adapté pour fournir une indication de l'amplitude de la force d'accélération nette perçue dans ledit plan du véhicule par l'étendue où des régions successives de l'indicateur sont allumées à partir de ladite position de référence, l'indicateur étant couplé à un circuit connecté à la puce accéléromètre (7) ; **caractérisé en ce que** les régions successives s'étendent en anneaux concentriques (9) autour de ladite position de référence ; et **en ce que** l'accéléromètre comprend en outre un mécanisme de mise à niveau pour aider à la mise en place à l'intérieur du véhicule, le mécanisme de mise à niveau étant procuré par un mode installation dans lequel l'orientation de la puce accéléromètre est déterminée par l'accélération due à la gravité pendant que le véhicule est immobile sur un sol à niveau, autorisant une correction de zéro, la correction de zéro étant appliquée par la suite, pendant que l'accéléromètre est en utilisation et que le véhicule est en mouvement.

2. Accéléromètre (1) selon la revendication 1, **caractérisé en outre en ce que** l'indicateur est sélectionné dans le groupe comprenant une partie d'un écran à diodes électroluminescentes (LED), une partie d'un écran mince à diodes électroluminescentes organiques (OLED), une partie d'un écran à matrice active à diodes électroluminescentes organiques (AMOLED), une partie d'un affichage à cristaux liquides (LCD), et des lampes incandescentes s'allumant successivement.

3. Accéléromètre (1) selon la revendication 1, **caractérisé en outre en ce que** l'indicateur est constitué d'une pluralité de diodes électroluminescentes (LEDs) (14) disposées en un réseau et adaptées pour être allumées par un circuit connecté à la puce accéléromètre (7), l'amplitude de la force d'accélération nette perçue étant indiquée par l'étendue où des LEDs (14) dans le réseau sont allumées à partir de ladite position de référence.

4. Accéléromètre (1) selon la revendication 1, **caractérisé en outre en ce que** chaque anneau est divisé en quadrants haut (15), bas (16), gauche (17) et droit (18) sur l'affichage, de sorte que l'amplitude nette et la direction de la force d'accélération perçue le long d'un axe avant et arrière du véhicule est indiquée par le nombre d'anneaux partiels dans les quadrants haut (15) ou bas (16) qui sont allumés à n'importe quel moment, et l'amplitude nette et la direction de la force d'accélération perçue gauche ou droite du véhicule est indiquée par le nombre d'anneaux partiels dans les quadrants gauche (17) ou droit (18) qui sont allumés à n'importe quel moment.

5. Accéléromètre (1) selon la revendication 4, **caractérisé en outre en ce que** l'accéléromètre (1) inclut un sélecteur (11) de mode d'affichage adapté pour sélectionner au moins entre un mode vecteur (dans lequel accélération vers l'avant, décélération de freinage vers l'arrière, virer à gauche et virer à droite sont affichés dans les quadrants des anneaux concentriques (9)) et un mode scalaire quatre directions (dans lequel l'amplitude de la force d'accélération nette est affichée par le nombre de tous les anneaux concentriques (9) allumés).

6. Accéléromètre (1) selon la revendication 5, **caractérisé en outre en ce que** le sélecteur (11) de mode d'affichage est adapté pour sélectionner le mode scalaire freinage/accélération (dans lequel la force d'accélération nette dans la direction avant ou arrière due au freinage ou à l'accélération du véhicule est affichée comme anneaux concentriques (9), ignorant les forces d'accélération gauche ou droite) et/ou le mode scalaire virage (dans lequel la force d'accélération gauche ou droite due au virage est affichée comme anneaux concentriques (9), ignorant les forces d'accélération vers l'avant dues à l'accélération ou vers l'arrière dues au freinage).

7. Accéléromètre (1) selon la revendication 1, **caractérisé en outre en ce que** l'accéléromètre (1) est muni d'une ventouse (4) adaptée pour le placement sélectionné par l'occupant du véhicule à l'intérieur d'un véhicule existant.

8. Accéléromètre (1) selon la revendication 1, **caractérisé en outre en ce que** l'accéléromètre (1) inclut une partie corps dans laquelle la puce accéléromètre (7) est montée et une partie affichage (2) dans laquelle l'interface d'affichage (3) est montée, la partie affichage (2) étant montée sur la partie corps de sorte que son orientation relativement à la partie corps peut varier, autorisant un occupant du véhicule à orienter l'affichage pour une meilleure visibilité personnelle.

9. Accéléromètre (1) selon la revendication 1, **caractérisé en outre en ce que** l'accéléromètre (1) inclut un retour audio conçu pour fonctionner en synchronisation avec l'interface d'affichage (3).

10. Accéléromètre (1) selon la revendication 9, **caractérisé en outre en ce qu'**un changement dans l'accélération est indiqué par un changement audible sélectionné parmi un changement de tonalité, un changement de volume, un changement de cadence d'impulsion, un changement de rythme et un changement de mélodie.

11. Accéléromètre (1) selon l'une des revendications précédentes, **caractérisé en outre en ce que** la sensibilité de l'affichage est amortie, et optionnellement ajustable, pour éviter de rapides changements d'affichage dans l'accélération indiquée.

12. Accéléromètre (1) selon la revendication 11, **caractérisé en outre en ce que** le circuit couplant l'accéléromètre (1) et l'interface d'affichage (3) inclut un filtre passe-bas, de préférence un filtre passe-bas à réponse impulsionnelle infinie.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2443018 A
- US 6130608 A
- JP 2005265800 B